(19) Europäisches Patentamt
European Patent Office
Office européen des brevets

(11) **EP 3 388 914 A1**

(12) **DEMANDE DE BREVET EUROPEEN**

(43) Date de publication:
**17.10.2018 Bulletin 2018/42**

(51) Int Cl.:
***G05D 1/00*** *(2006.01)*

(21) Numéro de dépôt: **18166327.9**

(22) Date de dépôt: **09.04.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.04.2017 FR 1700421**

(71) Demandeur: **THALES**
**92400 Courbevoie (FR)**

(72) Inventeurs:
• **HUBER, Clément, Victor**
  **75010 Paris (FR)**
• **ROGER, Michel**
  **31036 Toulouse (FR)**

(74) Mandataire: **Lavoix**
**2, place d'Estienne d'Orves**
**75441 Paris Cedex 09 (FR)**

(54) **PROCÉDÉ DE SUIVI DE CIBLE PAR UN DRONE, PROGRAMME D'ORDINATEUR, SYSTÈME ÉLECTRONIQUE ET DRONE ASSOCIÉS**

(57)  L'invention concerne un procédé (34) de suivi de cible (10), à l'aide d'un système (14) électronique de suivi de cible embarqué au sein d'un drone (12), le procédé (34) comprenant au moins la détermination (40) d'une trajectoire de déplacement du drone (12), la trajectoire comprenant une pluralité d'orbites successives centrées respectivement sur une pluralité de positions (C) successives de la cible (10), le rayon d'orbite étant propre à varier, d'une orbite à l'autre, en fonction d'au moins un élément appartenant au groupe comprenant :
- au moins une donnée (50) associée à la performance de déplacement du drone (12),
- la position courante de la cible (10),
- un angle d'élévation ($\zeta$) prédéterminé du drone par rapport à la cible (10),
- l'altitude courante du drone (12) par rapport à la cible(10).

FIG.2

EP 3 388 914 A1

# Description

La présente invention concerne un procédé de suivi de cible, à l'aide d'un système électronique de suivi de cible embarqué au sein d'un drone, notamment un drone aérien.

L'invention concerne également un programme d'ordinateur comportant des instructions logicielles qui, lorsqu'elles sont exécutées par un ordinateur, mettent en oeuvre un tel procédé de suivi de cible.

L'invention concerne également un système électronique associé de suivi de cible.

L'invention concerne également un drone configuré pour suivre une cible et comprenant le système électronique précité.

L'invention offre de nombreuses applications, en particulier la détermination de trajectoire pour le suivi de cibles mobiles.

L'invention concerne notamment le domaine des appareils motorisés volants (i.e. aéronefs), également appelés drones (UAV de l'anglais *Unmanned Aerial Vehicles*) notamment les drones dédiés à la surveillance terrestre ou maritime. L'invention est alors particulièrement utile pour optimiser le guidage du drone lorsque le drone est dans un mode de poursuite pour suivre une cible donnée se déplaçant au sol ou sur l'eau.

Pour le suivi de cibles mobiles terrestres ou maritimes, une solution existante consiste en la mise en oeuvre d'un pilotage à distance du drone aérien par un opérateur au sol pour suivre une cible mobile. Toutefois, cette solution est limitée par la portée de la liaison entre le drone et l'opérateur, cette portée limitant l'autonomie de déplacement du drone par rapport à l'opérateur au sol le contrôlant.

Pour y remédier, des solutions autonomes d'automatisation de suivi de cible ont été développées parmi lesquelles figure la méthode dite de la tangente décrite dans l'article « *Autonomous Target Following by Unmanned Aerial Vehicles* » de Rafi el al, basée sur la détermination autonome (i.e. sans aucune intervention d'opérateur) par le drone d'une trajectoire comprenant une succession de cercles centrés respectivement sur des positions successives de la cible mobile. Cette technique est également basée sur un asservissement à la distance courante « drone-cible », la distance courante « drone-cible » étant mesurée dans un plan (2D), horizontal par rapport à la surface du sol, le plan comprenant à la fois le point représentatif de la position courante de la cible et la projection dans ce plan du point représentatif de la position courante du drone.

Cependant, aucune des solutions proposées jusqu'à présent n'a donné pleinement satisfaction notamment en termes de visibilité continue de la cible et en termes d'optimisation de trajectoire de sorte que l'ensemble de la trajectoire est « volable » par le drone

A cet effet, l'invention a pour but un procédé de suivi de cible, à l'aide d'un système électronique de suivi de cible embarqué au sein d'un drone du type précité, dans lequel le procédé comprend au moins la détermination d'une trajectoire de déplacement du drone, la trajectoire comprenant une pluralité d'orbites successives centrées respectivement sur une pluralité de positions successives de la cible, le rayon d'orbite étant propre à varier, d'une orbite à l'autre, en fonction d'au moins un élément appartenant au groupe comprenant :

- au moins une donnée associée à la performance de déplacement du drone,
- la position courante de la cible,
- un angle d'élévation (prédéterminé du drone par rapport à la cible,
- l'altitude courante du drone par rapport à la cible.

Le procédé de suivi de cible selon l'invention permet alors d'assurer en permanence et de manière autonome une visibilité de la cible mobile et donc une amélioration du suivi de cible mobile.

Autrement dit, l'asservissement selon l'invention à la position courante de la cible, et/ou à un angle d'élévation prédéterminé, et/ou à au moins une donnée associée à la performance (vitesse (i.e. domaine ou plage de vitesse délimitée par une vitesse minimale et une vitesse maximale prédéterminées), angle de roulis maximum, etc.) de déplacement du drone, et/ou à l'altitude du drone permet de garantir la visibilité de la cible par le drone tout au long de sa trajectoire de poursuite.

Par la suite, par « orbite » on entend une trajectoire courbe en l'air, suivie par le drone en déplacement (i.e. en cours de vol et définie au sein d'un cercle dont le centre est une position de la cible et dont l'altitude est éventuellement adaptée pour assurer un bon angle d'observation. En d'autres termes, une orbite est une trajectoire courbe tridimensionnelle; un cercle, une altitude.

De plus, par « position courante » de la cible, on entend la position tridimensionnelle de la cible, autrement dit la position de la cible exprimée selon trois dimensions de l'espace.

Suivant d'autres aspects avantageux de l'invention, le procédé de couplage électronique comprend une ou plusieurs des caractéristiques suivantes, prises isolément ou suivant toutes les combinaisons techniquement possibles :

- la détermination de trajectoire est réactualisée à chaque changement de position de la cible ;
- le procédé comprend, préalablement à la détermination de trajectoire :

  - la réception de la position courante de la cible,
  - la comparaison de la position courante avec la position précédente de la cible, et
  - la détection d'un changement de position de la cible en fonction de la comparaison ;

- le procédé comprend en outre au moins une phase d'élaboration d'un segment de trajectoire à suivre,

la phase d'élaboration comprenant la détermination d'un positionnement courant du drone par rapport à l'orbite courante de trajectoire désirée pour le drone, et la détermination du segment de trajectoire à suivre par le drone en fonction du positionnement courant du drone pour rallier l'orbite courante ;

- procédé dans lequel :

  - lorsque le positionnement courant du drone est interne à l'orbite courante, le segment de trajectoire à suivre suit l'orbite courante, ou
  - lorsque le positionnement courant du drone est externe à l'orbite courante, le segment de trajectoire à suivre est un segment de la tangente à l'orbite courante, la tangente passant par la position courante du drone ;

- le procédé est réitéré périodiquement selon une période prédéterminée ;
- le procédé comprend en outre la détermination d'une consigne de guidage du drone en fonction d'au moins un écart de trajectoire entre le segment de trajectoire courant et le segment de trajectoire à suivre ;
- la détermination d'une trajectoire de déplacement du drone comprend la vérification de la distance d'observation de la cible par le drone et, en fonction du résultat de vérification, la détermination d'une modification de l'altitude ou de l'angle d'élévation du drone.

Par la suite, par « courant ou courante », on entend le segment de trajectoire actuel, le positionnement du drone, ou la position actuelle de la cible à un instant $t$, par « position précédente », on entend une position préalable (i.e. à in instant $t_0 < t$) à la position courante, et par « segment de trajectoire à suivre » on entend une portion, courbe ou rectiligne, de trajectoire à suivre pendant la période de temps séparant deux phases successives d'optimisation de segment de trajectoire.

L'invention a également pour objet un programme d'ordinateur comportant des instructions logicielles qui, lorsqu'elles sont exécutées par un ordinateur, mettent en oeuvre un procédé de suivi de cible tel que défini ci-dessus.

Par la suite, la référence à un programme d'ordinateur qui, lorsqu'il est exécuté, effectue l'une quelconque des instructions logicielles précitées, ne se limite pas à un programme d'application s'exécutant sur un ordinateur hôte unique.

En d'autres termes, les termes programme d'ordinateur et logiciel sont utilisés par la suite dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre le procédé de suivi de cible tel que défini ci-dessus.

L'invention a également pour objet un système électronique de suivi de cible embarqué au sein d'un drone comprenant un module de détermination d'une trajectoire de déplacement du drone la trajectoire comprenant une pluralité d'orbites successives centrées respectivement sur une pluralité de positions successives de la cible, le rayon d'orbite étant propre à varier, d'une orbite successive à l'autre, en fonction d'au moins un élément appartenant au groupe comprenant :

- au moins une donnée associée à la performance de déplacement du drone,
- la position courante de la cible,
- un angle d'élévation prédéterminé du drone par rapport à la cible,
- l'altitude courante du drone par rapport à la cible.

Suivant d'autres aspects avantageux de l'invention, le système électronique de suivi de cible comprend une ou plusieurs des caractéristiques suivantes, prises isolément ou suivant toutes les combinaisons techniquement possibles :

- le système électronique de suivi de cible est propre à être connecté à un module de détermination de la position courante de la cible
- le module de détermination est un radar et/ou un capteur d'image embarqué(s) à bord du drone.

L'invention a également pour objet un drone configuré pour suivre une cible, le drone comprenant le système électronique de suivi de cible du type précité.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un drone comprenant un système électronique de suivi de cible selon l'invention;
- la figure 2 est un organigramme d'un procédé de suivi de cible selon l'invention ;
- la figure 3 est un organigramme de l'étape de calcul de rayon d'orbite de la figure 2;
- la figure 4 est un organigramme de l'étape de vérification de la distance d'observation de la cible par le drone ;
- la figure 5 est un organigramme de la phase d'élaboration de trajectoire à suivre de la figure 2.

De façon conventionnelle dans la présente demande, les expressions « sensiblement égal à » et « environ » exprimeront chacune une relation d'égalité à plus ou moins 10 %.

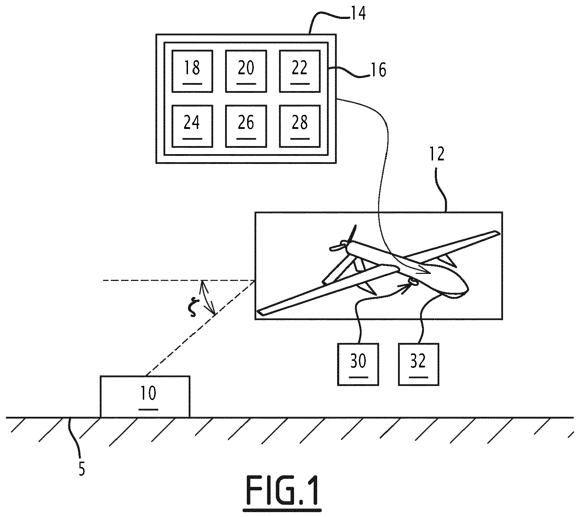

Sur l'exemple de la figure 1, une cible 10 est suivie par un drone 12, c'est-à-dire un véhicule mobile sans pilote à bord. La cible 10 est propre à se déplacer sur une surface S (i.e. la cible est mobile) telle que la surface de l'eau ou la surface de la terre et correspond, par exemple, à un individu ou un véhicule.

Par la suite, selon l'exemple représenté sur la figure 1, le drone 12 est un drone aérien de surveillance du terrain survolé, et est par exemple un drone de catégorie supérieure aux drones grand public en termes de contraintes de certification, tel qu'un drone TUAV (de l'anglais *Tactical Unmanned Aerial Vehicles*)*, MALE (de l'anglais *Medium Altitude, Long Endurance*)*, HALE (de l'anglais *High Altitude, Long Endurance*), ou encore UCAV (de l'anglais *Unmanned Combat Aerial Vehicles*). De tels drones 12 aériens de catégorie supérieure comprennent notamment un système de gestion automatique de vol non représenté.

Tel qu'illustré sur la figure 1, lors des déplacements mutuels du drone 12 et de la cible 10, un angle d'élévation prédéfini est l'angle $\zeta$ formé entre le plan horizontal du drone 12 et la droite allant depuis le drone 12 vers la cible 10.

Un système 14 électronique de suivi de cible est embarqué dans le drone 12. Un tel système électronique de suivi de cible 14 est configuré pour déterminer la trajectoire du drone 12 de sorte qu'il suive le plus fidèlement la cible 10 avec une visibilité continue de celle-ci.

En complément facultatif, le système 14 électronique de suivi de cible est propre à être intégré, lorsque le drone 12 en dispose, au sein du système de gestion de vol FMS (*FMS de l'anglais Flight Management system*), non représenté.

Pour ce faire, le système électronique de suivi de cible 14 comprend notamment une unité de traitement d'informations 16, formée par exemple d'une mémoire 18 et d'un processeur 20, par exemple, de type GPU (Graphics Processing Unit), ou VPU (Vision Processing Unit) associé à la mémoire 20.

Optionnellement, lorsque le drone 12 dispose d'un système de gestion de vol FMS, l'unité de traitement d'informations 16 est propre à être connectée en entrée du système de gestion de vol FMS ou y est directement intégrée.

L'unité de traitement d'informations 16 comprend en outre un module 22 de mise à jour de la position courante de la cible 10 et de l'état du drone 12 (par « état » on entend les données de position, cap, vitesse instantanée...) à partir de données prédéterminées reçues en temps réel. Ces données sont par exemple fournies par un module de détermination embarqué à bord du drone 12, ou selon un autre exemple reçues après émission par un opérateur au sol. Un tel module de mise à jour 22 est notamment connectable à la mémoire 18 pour enregistrer toute nouvelle position de la cible 10.

Pour ce faire, le module de mise à jour 22 comprend notamment :

- un récepteur, non représenté, configuré pour recevoir la position courante de la cible 10,

- un comparateur, par exemple logiciel, non représenté, configuré pour comparer une position courante de la cible avec une position précédente de la cible mémorisée dans la mémoire 18, et

- un module de détection, non représenté, propre à être connecté au comparateur et configuré pour détecter toute variation de position de la cible correspondant à une différence entre la position courante de la cible et la position précédente de la cible en fonction du résultat (nul représentatif d'une invariance de position et non nul représentatif d'une différence de position) délivré par le comparateur et configuré pour mémoriser la position courante de la cible 10 (i.e. nouvelle position de la cible) lorsque celle-ci est différente de la position de cible 10 précédemment mémorisée dans la mémoire 18.

Par ailleurs, l'unité de traitement d'informations 16 comprend également un module 24 de détermination de la trajectoire de déplacement du drone, la trajectoire comprenant, selon l'invention, une pluralité d'orbites successives centrées respectivement sur une pluralité de positions successives de la cible.

Une orbite, est, par exemple, de préférence circulaire ou encore de la forme d'un hippodrome, elliptique, en forme de huit, etc.

L'entrée d'un tel module 24 de détermination de la trajectoire est propre à être connectée à la sortie du module de mise à jour 22. De plus, un tel module 24 de détermination de la trajectoire est notamment configuré pour d'une part centrer l'orbite courante sur la position courante de la cible 10, et d'autre part pour calculer le rayon instantané de l'orbite en fonction de l'angle d'élévation $\zeta$ prédéterminé du drone 12 par rapport à la cible 10 et/ou en fonction de la performance (vitesse, angle de roulis maximum ...) du drone et/ou en fonction de l'altitude du drone par rapport à la cible.

Selon un aspect particulier, un tel module 24 de détermination de la trajectoire est propre à être activé de manière évènementielle, autrement dit à chaque évènement correspondant à une détection d'une différence de position de la cible 10.

L'unité de traitement d'informations 16 comprend également un module 26 d'élaboration (i.e. de détermination) d'un segment de trajectoire volable à suivre sur une période prédéterminée. L'entrée d'un tel module 26 est propre à être connectée à la sortie du module de mise à jour 22 et/ou à la sortie du module 24 de détermination de la trajectoire.

De plus, un tel module 26 d'élaboration d'un segment de trajectoire volable à suivre est configuré, d'une part, pour déterminer un positionnement courant du drone par rapport à l'orbite courante de trajectoire désirée pour le drone 12, et d'autre part pour déterminer le segment de trajectoire à suivre par le drone 12 en fonction du positionnement courant du drone 12 par rapport à l'orbite courante désirée.

Selon un aspect particulier, un tel module 26 d'élaboration d'un segment de trajectoire volable est itératif, autrement dit, propre à être activé périodiquement selon une période *dt* prédéterminée mémorisée au préalable par un opérateur. Par exemple, la période *dt* utilisée pour réitérer l'activation du module 26 d'élaboration est comprise entre zéro et cinq secondes, notamment égale à une seconde.

De plus, l'unité de traitement d'informations 16 comprend également un module 28 de détermination de consigne de guidage en fonction d'un écart entre le segment de trajectoire courant et le segment de trajectoire à suivre.

L'entrée d'un tel module 28 de détermination de consigne de guidage est propre à être connectée à la sortie du module 26 d'élaboration d'un segment de trajectoire volable à suivre.

Ce module 28 de détermination de consignes de guidage est configuré pour fournir des consignes de guidage à partir des données produites par les capteurs du drone, non représentés (centrale inertielle, module de géolocalisation, estimateur de vitesse, baromètre, etc. qui évaluent à tout moment l'attitude instantanée réelle du drone, sa position, son altitude et sa vitesse) de sorte à produire, le cas échéant des corrections de vitesse fournies à un module de propulsion, non représenté, du drone 12, des corrections d'attitude ou encore des corrections d'altitude à un système de guidage du drone 12 comprenant au moins un module de contrôle des gouvernes.

Dans l'exemple de la figure 1, , le module 24 de détermination de la trajectoire, le module 26 d'élaboration d'un segment de trajectoire volable et le module 28 de détermination de consigne de guidage sont réalisés chacun sous forme matérielle correspondant à un composant logique programmable activé par le processeur 20, tel qu'un FPGA (de l'anglais *Field Programmable Gate Array),* ou encore sous forme d'un circuit intégré dédié, tel qu'un ASIC (de l'anglais *Applications Specific Integrated Circuit*).

Selon une variante, non représentée, le module 24 de détermination de la trajectoire, le module 26 d'élaboration d'un segment de trajectoire volable et le module 28 de détermination de consigne de guidage sont réalisés chacun sous forme d'un logiciel exécutable par le processeur 34. La mémoire 18 de l'unité de traitement d'informations 16 est alors apte à stocker un logiciel de détermination de la trajectoire, un logiciel d'élaboration d'un segment de trajectoire volable. Le processeur 20 de l'unité de traitement d'informations 16 est alors apte à exécuter le logiciel de détection, ainsi qu'en complément facultatif le logiciel de suivi et le logiciel de comparaison.

Les différents modules 22, 24, 26, 28 du système électronique 14 de suivi de cible selon l'invention sont, tel que représentés sur l'exemple de la figure 1, implémentés au moyen d'un même processeur 20 ou sur un même circuit électronique non représenté, ou selon une variante, non représentée, distribués sur plusieurs processeurs ou plusieurs circuits.

En particulier, le drone 12 comprend un module de détermination de la position courante de la cible propre à être connecté au module 22 de mise à jour.

Un tel module de détermination de la position courante de la cible est, par exemple distinct du système 14 électronique de suivi de cible (i.e. localisé en dehors du boîtier comprenant le système 14 électronique de suivi de cible).

Par exemple, tel que représenté sur la figure 1, le module de détermination de la position courante de la cible correspond à un capteur d'image 30 ou à un radar 32.

Le capteur d'image 30 est par exemple une caméra à visée verticale pointant vers le bas et configurée pour capter des images successives d'un terrain survolé par le drone 12.

En variante ou en complément, le capteur d'image 30 est une caméra à visée frontale, non représentée, permettant d'obtenir une image de la scène vers laquelle est orienté le drone 12. Un tel capteur est connecté à un module d'interprétation de l'image (i.e. de traitement d'image), non représenté permettant d'extraire la position de la cible, à partir de l'image capturée.

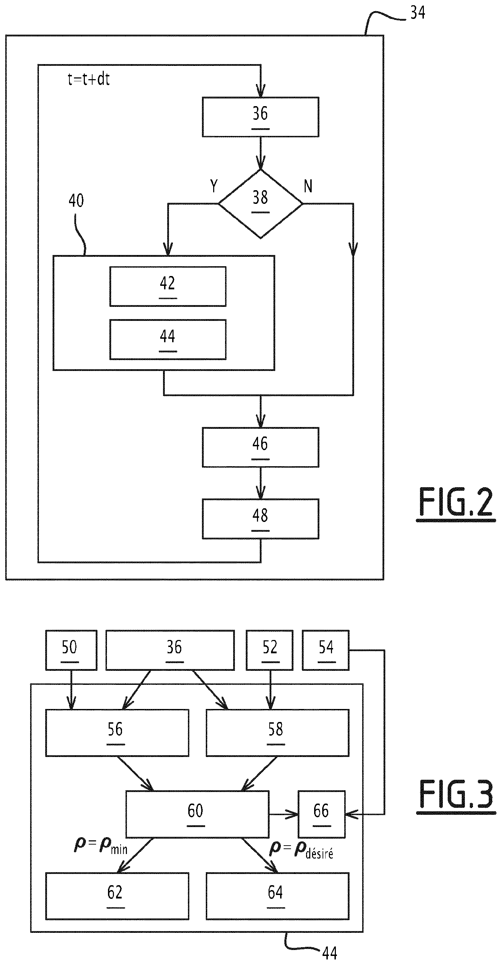

Le fonctionnement du système électronique de suivi de cible selon l'invention va être à présent décrit à l'aide de la figure 2 illustrant un organigramme d'un exemple de mode de réalisation du procédé 34 de suivi de cible selon l'invention, mis en oeuvre par ordinateur.

Lors d'une étape initiale 36, la position courante de la cible et l'état courant du mobile suiveur (position, cap,...) sont mis à jour par le module de mise à jour 22.

Pour ce faire, l'étape initiale 36 comprend une étape de réception de la position courante de la cible 10 fournie, par exemple, par un module de détermination de la position courante de la cible 10 correspondant par exemple au capteur d'image 30 ou au radar 32 de la figure 1. Un tel capteur étant connecté à un module d'interprétation de l'image (i.e. de traitement d'image), non représenté permettant d'extraire la position de la cible, à partir de l'image capturée.

Selon un autre exemple, l'étape de réception comprend à la réception de la position courante de la cible 10 préalablement émise par un opérateur au sol distant du drone.

Lors d'une étape suivante 38, la comparaison de la position courante avec la position précédente de la cible 10 est mise en oeuvre, la position précédente de la cible étant, par exemple stockée dans la mémoire 18 de l'unité de traitement 16.

Le résultat de cette comparaison 38 permet la détection d'un changement de position courante de la cible en fonction du résultat positif Y ou négatif N de la comparaison 38.

En particulier, dans le cas où la position de la cible 10 n'est pas modifiée (i.e. mise à jour, par exemple du fait que la cible a marqué un arrêt ou est passée par exemple dans un tunnel et que le capteur 30 ne voyant plus la cible 10, ne sait plus donner de nouvelle position), l'orbite n'est pas modifiée N et le drone 12 va s'asservir à la dernière orbite d'observation définie.

Dans le cas où la position est détectée comme modifiée, une étape 40 est activée, la détermination d'une trajectoire de déplacement du drone 12 est mise en oeuvre par le module 24 de détermination de trajectoire, la trajectoire comprenant une pluralité d'orbites successives centrées respectivement sur une pluralité de positions successives de la cible, le rayon d'orbite étant propre à varier, d'une orbite successive à l'autre.

Pour ce faire l'étape 40 comprend deux étapes successives de centrage 42 de l'orbite sur la position courante de la cible et de calcul 44 du rayon instantané de l'orbite en fonction d'un angle d'élévation $\zeta$ prédéterminé, de la performance (vitesse, angle de roulis maximum ...) du drone et/ou de l'altitude du drone. En d'autres termes, selon cette étape 40, l'orbite d'observation par le drone 12 de la cible 10 est redéfinie à la fois en fonction de la position courante de la cible et d'un angle d'élévation $\zeta$ prédéterminé, de la performance du drone, et/ou de l'altitude du drone.

Par exemple, l'angle d'élévation $\zeta$ prédéterminé est préalablement enregistré dans la mémoire 18, par un opérateur, via une interface de saisie non représentée, en fonction de la mission du drone 12 (i.e. en fonction du type de cible à suivre), ou est propre à être modifié automatiquement en cours de mission (i.e. en cours de déplacement en poursuite de cible 10).

Lors d'une étape suivante 46, une phase d'élaboration d'un segment de trajectoire volable à suivre est mise en oeuvre par le module 26 d'élaboration d'un segment de trajectoire.

Comme illustré sur la figure 2, la mise en oeuvre de l'étape 40 la détermination d'une trajectoire de déplacement du drone 12 est mise en oeuvre de manière « évènementielle » car conditionnée à la détection Y d'un changement de position de la cible.

Différemment, la mise en oeuvre de la phase d'élaboration 46 d'un segment de trajectoire volable à suivre est cyclique et réitérée à intervalle de temps constant *dt.* En d'autres termes, la phase d'élaboration 46 est mise en oeuvre périodiquement, indépendamment de la mise en oeuvre de l'étape 40 de détermination de trajectoire (i.e. peu importe le résultat positif Y ou négatif N de l'étape de comparaison 38).

Puis lors d'une étape suivante 48, la détermination d'une consigne de guidage du drone 12 est mise en oeuvre en fonction d'écart entre le segment de trajectoire courant et le segment de trajectoire à suivre. L'état du drone 12 découlant de l'application de cette consigne est ensuite réinjectée en entrée de l'étape de mise à jour pour la phase d'élaboration 46 suivante.

Ainsi, en temps réel le drone 12 est propre à corriger automatiquement (i.e. en toute autonomie sans intervention humaine) sa trajectoire pour permettre d'assurer en permanence une visibilité de la cible mobile tout en maintenant un angle d'élévation d'observation désiré, par exemple constant sur au moins une partie de la trajectoire.

L'étape 44 de calcul de rayon d'orbite de la figure 2 est à présente détaillée en relation avec l'exemple de la figure 3.

Selon cet exemple de la figure 3, l'orbite dont le rayon est à calculer est circulaire.

Selon l'exemple de la figure 3, la ou les données d'entrée 50, 36, 52, 54 de cette étape de calcul 44 correspondent au moins à un élément, voire à tous les éléments, appartenant au groupe comprenant :

- au moins une donnée 50 associée (i.e. indicateur associé) à la performance de déplacement du drone 12, à savoir, par exemple, la vitesse horizontale $\vec{V}_{drone}$, l'angle de roulis maximum $\phi_{max}$, la vitesse de mise en virage, etc. ;
- les données de mise à jour 36 de la position courante de la cible 10 et de l'état du drone 12, par exemple l'altitude $Z_{cible}$ de la cible 10 et l'altitude $Z_{drone}$ du drone 12,
- l'angle 52 d'élévation $\zeta$ souhaité, par exemple compris entre vingt et quatre-vingt-dix degrés,
- la distance 54 d'observation maximale $\lambda_{max}$, caractéristique associée à la performance du capteur 30 et/ou associée à la résolution d'image (i.e. la qualité d'image) souhaitée.

Plus précisément, à partir des données 50 associées aux performances de déplacement du drone 12 et des données de mise à jour 36, une étape 56 de calcul du rayon minimal de l'orbite $\rho_{min}$ (i.e. du rayon de virage minimum, par exemple, pour un drone aérien) est mise en oeuvre selon l'équation suivante :

$$\rho_{min} = \frac{\left\| \vec{V}_{drone} \right\|^2}{g \tan \phi_{max}}$$ où $g$ est la constante gravitationnelle. En d'autres termes, la vitesse horizontale $\vec{V}_{drone}$ de vol du drone aérien 12 a directement une influence sur la taille minimale des orbites de la trajectoire.

En parallèle, tel que représenté selon l'exemple de la figure 3, ou selon des variantes, non représentées, avant ou après l'étape 56 de calcul de rayon minimal, une étape 58 de calcul du rayon instantané désiré de l'orbite est mise en oeuvre, à partir des données de mise à jour 36 et de l'angle 52 d'élévation souhaité $\zeta$, selon l'équation suivante : $$\rho_{désiré} = \left| \frac{Z_{drone} - Z_{cible}}{\tan \zeta} \right|.$$ En d'autres termes, l'altitude de vol $Z_{drone}$ du drone aérien 12 a directement une influence sur la taille des orbites de la trajectoire.

A partir de ces deux rayons $\rho_{min}$ et $\rho_{désiré}$ issus des étapes de calcul 56 et 58, une étape 60 de détermination du rayon $\rho$ de l'orbite est mise en oeuvre de sorte que le rayon $\rho$ correspond au maximum des deux rayons $\rho_{min}$ et $\rho_{désiré}$. En d'autres termes, le rayon $\rho$ de l'orbite

est tel que $\rho = \max(\rho_{min}, \rho_{désiré})$.

Ainsi pour différents modèles de drone 12 se déplaçant avec des vitesses horizontales $\vec{V}_{drone}$ et/ou selon une altitude de vol $Z_{drone}$ différente(s), la trajectoire comprenant une pluralité d'orbites successives sera différente d'un modèle de drone 12 à l'autre.

Lorsque le résultat de l'étape 60 est $\rho = \rho_{min}$, alors l'altitude du drone $Z_{drone}$ est recalculée selon une étape 62 de sorte à satisfaire l'élévation désirée selon l'équation

$$Z_{drone} = \rho_{min} \tan \zeta + Z_{cible}.$$

En revanche, si le résultat de l'étape 60 est $\rho = \rho_{désirée}$, alors l'altitude du drone $Z_{drone}$ est maintenue inchangée selon l'étape 64.

En d'autres termes, le procédé 34 selon l'invention privilégie dans un premier temps l'élévation $\zeta$ souhaitée en faisant varier le rayon $\rho$ de l'orbite plutôt qu'en faisant varier l'altitude $Z_{drone}$ du drone 12. En effet, au cours d'opérations impliquant une pluralité de drones aérien 12, il est, par exemple, préférable d'avoir une altitude de vol fixe lorsqu'un niveau de vol est attribué à chaque drone alors libre d'évoluer latéralement à ce niveau de vol qui lui est alloué. Il faut cependant que le rayon de l'orbite $\rho$ soit supérieur au rayon minimal caractéristique de la performance du drone. Sinon, c'est que l'élévation souhaitée est trop importante ou que l'écart d'altitude avec la cible est trop faible. Dans ce cas, on fige donc, selon l'invention, le rayon de l'orbite $\rho$ à la valeur du rayon minimal $\rho_{min}$ et on fait varier l'altitude $Z_{drone}$ du drone 12 afin de continuer à privilégier l'élévation $\zeta$ désirée.

De plus, l'étape 44 de calcul de rayon d'orbite de détermination d'une consigne de guidage du drone 12 comprend une étape 66 de vérification de la distance d'observation instantanée $\lambda$ de la cible 10 par le drone 12 et, en fonction du résultat de vérification, la détermination d'une modification de l'altitude ou de l'angle d'élévation $\zeta$ du drone 12.

Plus précisément, l'étape 66 de vérification de la distance d'observation instantanée $\lambda$ comprend, tel qu'illustré sur la figure 3, tout d'abord une étape 68 de calcul de la distance d'observation instantanée $\lambda$ selon

$$\lambda = \frac{\rho}{\cos \zeta}$$

l'équation suivante : et de comparaison à la distance 54 d'observation maximale $\lambda_{max}$ (i.e. que la distance à la cible 10 n'est pas supérieure à la distance de détection maximale du capteur 30, autrement dit, que la résolution est inférieure à celle désirée).

Lorsque $\lambda > \lambda_{max}$, alors selon une étape 70, le procédé 34 selon l'invention déclenche une étape 72 de correction de l'altitude $Z_{drone}$ du drone 12 ou de modification de l'angle d'élévation $\zeta$ désiré de sorte à rétablir au moins une égalité entre la distance d'observation instantanée $\lambda$ et la distance 54 d'observation maximale $\lambda_{max}$ tel que

$$\lambda = \lambda_{max} = \left| \frac{\frac{Z_{drone} - Z_{cible}}{\tan \zeta}}{\cos \zeta} \right|.$$

Le choix de modification de l'altitude $Z_{drone}$ ou de modification de l'angle d'élévation $\zeta$ est par exemple à la charge de l'opérateur du drone ou préalablement mémorisé au sein de la mémoire 18, par exemple en fonction de la mission à effectuer par le drone 12. En effet, en fonction de la mission à effectuer par le drone 12, pour des raisons de furtivité la modification 72 de l'altitude $Z_{drone}$ ou la modification 72 de l'angle d'observation $\zeta$ sera privilégiée.

Préférentiellement, il est par exemple choisi de maintenir l'angle d'observation $\zeta$ constant. Selon cette variante, la modification 72 de l'altitude $Z_{drone}$ du drone 12 mise en oeuvre de sorte à rétablir au moins une égalité entre la distance d'observation instantanée $\lambda$ et la distance 54 d'observation maximale $\lambda_{max}$ est prioritaire devant l'étape étape 62 où, lorsque $\rho = \rho_{min}$, l'altitude du drone $Z_{drone}$ est recalculée de sorte à satisfaire l'élévation désirée selon l'équation $Z_{drone} = \rho_{min} \tan \zeta + Z_{cible}$.

En d'autres termes, selon cette variante de réalisation, on rétablit avant tout l'égalité entre la distance d'observation instantanée $\lambda$ et la distance 54 d'observation maximale $\lambda_{max}$.

Lorsque $\lambda \leq \lambda_{max}$, alors selon une étape 74, le procédé 34 selon l'invention achève la vérification 66 vérification de la distance d'observation instantanée $\lambda$ et se poursuit par la phase cyclique d'élaboration 46 d'un segment de trajectoire à suivre.

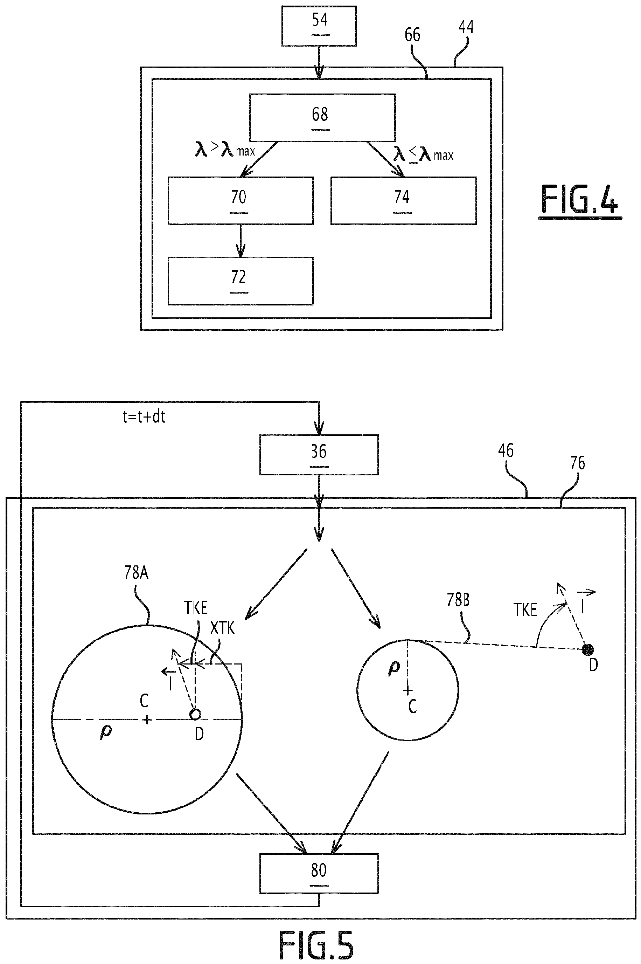

La phase cyclique d'élaboration 46 d'un segment de trajectoire à suivre de la figure 2 est à présent détaillée en relation avec l'exemple de la figure 5.

A partir de l'orbite centrée sur la position courante C de la cible 10 et de rayon $\rho$ et/ou à partir des données de mise à jour 36 comprenant la position du drone 12, une étape 76 de détermination d'un positionnement D courant du drone 12 par rapport à l'orbite courante de trajectoire suivie par le drone 12 et de détermination du segment de trajectoire à suivre par le drone est mise en oeuvre.

Plus précisément, lorsque le positionnement D courant du drone 12 est interne à l'orbite courante 78A (i.e. l'élévation est plus élevée que souhaitée), le segment de trajectoire à suivre suit l'orbite courante 78A.

Ainsi, en comparaison avec la méthode de la tangente décrite dans l'article « *Autonomous Target Following by Unmanned Aerial Vehicles* » de Rafi el al où, lorsque le positionnement D courant du drone 12 est interne à l'orbite courante 78A (i.e. l'élévation est moins élevée que souhaitée), le drone vole en ligne droite jusqu'à sortir de l'orbite, une meilleur stratégie de rejointe au plus tôt de l'orbite est proposée selon la présente invention.

En revanche, lorsque le positionnement D courant du drone 12 est externe à l'orbite courante 78A (i.e.

l'élévation est moins élevée que souhaitée), le segment de trajectoire à suivre est un segment 78B de la tangente à l'orbite courante, la tangente passant par la position D courante du drone 12. En d'autres termes, dans ce cas, il est proposé, selon l'invention, que le drone 12 rejoigne l'orbite selon la tangente au cercle passant par sa position D. Le choix de la tangente s'appuie, par exemple sur le vecteur vitesse de la cible et/ou sa direction. Dans l'exemple, c'est « la plus proche tangente» qui a été choisie, on entend ici la tangente demandant le moins de correction de cap depuis le cap actuel du drone 12.

Le segment de trajectoire à suivre 78B est alors défini comme le segment de tangente compris entre la position D courante du drone 12 et le point tangent tel que représenté sur la figure 4.

En complément, une étape 80 de détermination de paramètres de guidage est mise en oeuvre.

Plus précisément, ces paramètres de guidage correspondent à l'éloignement latéral XTK ainsi que l'erreur de cap TKE entre le segment de trajectoire courant et le segment de trajectoire à suivre.

En particulier, lorsque le segment de trajectoire à suivre est un segment 78B de la tangente à l'orbite courante, l'écart latéral XTK est nul par définition et l'erreur de cap TKE correspond à l'angle entre le cap actuel du mobile et le cap du segment courant.

La phase d'élaboration 46 est réitérée périodiquement selon une période *dt* comprise par exemple entre zéro et cinq secondes, notamment égale à une seconde.

Une fois en possession des écarts XTK et TKE délivrés à l'issue de la phase cyclique d'élaboration 46, l'étape 48 de détermination d'une consigne de guidage du drone 12 est mise en oeuvre par le module 28 de détermination de consigne de guidage, qui, lorsque le drone 12 dispose d'un système de gestion de vol FMS, est propre à être connecté en entrée su système de gestion de vol FMS ou y est directement intégré.

Ainsi, lorsque le drone 12 dispose d'un système de gestion de vol FMS, le système de gestion de vol FMS se sert notamment d'une loi d'acquisition et de tenue des trajectoire horizontale, implantée en son sein et couramment appelée loi « Hpath » (de l'anglais *Horizontal Path*) pour engendrer, à partir des écarts évalués, des consignes d'altitude et de vitesse transmises au pilote automatique ou au directeur de vol.

Que le positionnement D courant du drone 12 soit interne ou externe à l'orbite courante 78A, la consigne de guidage est déterminée de manière identique. Par exemple, la consigne de guidage est une consigne de roulis dans le cas d'un drone 12 aérien à voilure fixe selon la loi Hpath déjà implémentée dans le système de gestion de vol FMS. Cette commande de roulis est ensuite envoyée au système de guidage du drone 12.

L'ensemble des étapes du procédé 34 précédemment décrites est réitéré périodiquement selon une période *dt* comprise par exemple entre zéro et cinq secondes, notamment égale à une seconde.

On conçoit ainsi, que le procédé 34 de suivi de cible, le système 14 électronique ou le drone 12 associés, permettent d'offrir une stratégie de suivi de la cible 10 intuitive, la trajectoire fournie par le procédé 34 étant, sensiblement la même trajectoire que celle que suivrait un pilote, et par la même optimale à chaque instant au sens de la théorie du contrôle optimal (solution « bang-singular-bang » du problème temps-minimal) mais aussi en raison du principe d'inactivation.

Par ailleurs, le procédé 34 proposé selon l'invention est robuste, facilement connectable ou intégrable au sein d'un système de gestion de vol FMS, et propre à s'adapter aux contraintes des missions pour fournir un suivi de cible même dans les cas dégradés (par exemple dans le cas où la cible disparaîtrait pendant un laps de temps).

## Revendications

1. Procédé (34) de suivi de cible (10), à l'aide d'un système (14) électronique de suivi de cible embarqué au sein d'un drone (12),
   le procédé (34) comprenant au moins la détermination (40) d'une trajectoire de déplacement du drone (12), la trajectoire comprenant une pluralité d'orbites successives centrées respectivement sur une pluralité de positions (C) successives de la cible (10), le rayon d'orbite étant propre à varier, d'une orbite à l'autre, en fonction d'au moins un élément appartenant au groupe comprenant :

   - au moins une donnée (50) associée performance de déplacement du drone (12),
   - la position courante de la cible (10),
   - un angle d'élévation ($\zeta$) prédéterminé du drone par rapport à la cible (10),
   - l'altitude courante du drone (12) par rapport à la cible(10).

2. Procédé (34) de suivi de cible selon la revendication 1, dans lequel la détermination (40) de trajectoire est réactualisée à chaque changement de position de la cible (10).

3. Procédé (34) de suivi de cible selon l'une quelconque des revendications précédentes, dans lequel le procédé (34) comprend en outre au moins une phase (46) d'élaboration d'un segment de trajectoire à suivre,
   la phase d'élaboration (46) comprenant la détermination d'un positionnement courant du drone (12) par rapport à l'orbite courante de trajectoire désirée pour le drone (12), et la détermination du segment de trajectoire à suivre par le drone (12) en fonction du positionnement courant du drone (12) pour rallier l'orbite courante.

**4.** Procédé de suivi de cible selon la revendication 3, dans lequel :

- lorsque le positionnement courant du drone (12) est interne à l'orbite courante, le segment de trajectoire à suivre suit l'orbite courante (78A), ou
- lorsque le positionnement courant du drone (12) est externe à l'orbite courante, le segment de trajectoire à suivre est un segment (78B) de la tangente à l'orbite courante, la tangente passant par la position courante du drone.

**5.** Procédé de suivi de cible selon l'une quelconque des revendications précédentes, dans lequel le procédé (34) est réitéré périodiquement selon une période prédéterminée.

**6.** Procédé de suivi de cible selon l'une quelconque des revendications 3 à 5, dans lequel le procédé comprend en outre la détermination (48) d'une consigne de guidage du drone en fonction d'au moins un écart de trajectoire entre le segment de trajectoire courant et le segment de trajectoire à suivre.

**7.** Procédé de suivi de cible selon la revendication 6, dans lequel la détermination (40) d'une trajectoire de déplacement du drone (12) comprend la vérification (66) de la distance d'observation de la cible par le drone et, en fonction du résultat de vérification, la détermination d'une modification de l'altitude ou de l'angle d'élévation du drone.

**8.** Programme d'ordinateur comportant des instructions logicielles qui, lorsqu'elles sont exécutées par un ordinateur, mettent en oeuvre un procédé selon l'une quelconque des revendications précédentes.

**9.** Système (14) électronique de suivi de cible (10) embarqué au sein d'un drone (12) comprenant un module de détermination d'une trajectoire de déplacement du drone (12) la trajectoire comprenant une pluralité d'orbites successives centrées respectivement sur une pluralité de positions (C) successives de la cible (10), le rayon d'orbite étant propre à varier, d'une orbite successive à l'autre, en fonction d'au moins un élément appartenant au groupe comprenant :

- au moins une donnée (50) associée à la performance de déplacement du drone (12),
- la position courante de la cible (10),
- un angle d'élévation ($\zeta$) prédéterminé du drone par rapport à la cible (10),
- l'altitude courante du drone (12) par rapport à la cible(10).

**10.** Drone (12) configuré pour suivre une cible, le drone comprenant un système électronique selon la revendication 9.

FIG.1

34

t=t+dt

36

Y ◇ 38 N

40

42

44

46

48

## FIG.2

50    36    52    54

56    58

60    66

$\rho = \rho_{min}$    $\rho = \rho_{désiré}$

62    64

## FIG.3

44

FIG.4

FIG.5

Europäisches Patentamt

European Patent Office

Office européen des brevets

## RAPPORT DE RECHERCHE EUROPEENNE

Numéro de la demande

EP 18 16 6327

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/018822 A1 (NEVDAHS ILJA [LV] ET AL) 21 janvier 2016 (2016-01-21) | 1,8-10 | INV. G05D1/00 |
| Y | * le document en entier * | 2-7 | |
| Y | US 2010/250022 A1 (HINES DESTRY [US] ET AL) 30 septembre 2010 (2010-09-30) * le document en entier * | 1-10 | |
| Y | US 2006/074557 A1 (MULLIGAN ANTHONY C [US] ET AL) 6 avril 2006 (2006-04-06) * le document en entier * | 1-10 | |
| Y | WO 2014/147042 A2 (DELTA DRONE [FR]) 25 septembre 2014 (2014-09-25) * le document en entier * | 1-10 | |

DOMAINES TECHNIQUES RECHERCHES (IPC)

G05D

Le présent rapport a été établi pour toutes les revendications

| Lieu de la recherche | Date d'achèvement de la recherche | Examinateur |
|---|---|---|
| Munich | 3 août 2018 | Lalinde, Rafael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................
& : membre de la même famille, document correspondant

EPO FORM 1503 03.82 (P04C02)

**EP 3 388 914 A1**

## ANNEXE AU RAPPORT DE RECHERCHE EUROPEENNE
## RELATIF A LA DEMANDE DE BREVET EUROPEEN NO.

EP 18 16 6327

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-08-2018

| Document brevet cité au rapport de recherche | Date de publication | Membre(s) de la famille de brevet(s) | Date de publication |
|---|---|---|---|
| US 2016018822 A1 | 21-01-2016 | US 2016018822 A1<br>US 2018088580 A1 | 21-01-2016<br>29-03-2018 |
| US 2010250022 A1 | 30-09-2010 | AUCUN | |
| US 2006074557 A1 | 06-04-2006 | US 2006074557 A1<br>WO 2005123502 A2 | 06-04-2006<br>29-12-2005 |
| WO 2014147042 A2 | 25-09-2014 | FR 3003361 A1<br>WO 2014147042 A2 | 19-09-2014<br>25-09-2014 |

EPO FORM P0460

Pour tout renseignement concernant cette annexe : voir Journal Officiel de l'Office européen des brevets, No.12/82